(19) Europäisches Patentamt
European Patent Office
Office européen des brevets

(11) **EP 1 351 592 B1**

(12) **EUROPÄISCHE PATENTSCHRIFT**

(45) Veröffentlichungstag und Bekanntmachung des Hinweises auf die Patenterteilung:
**22.08.2012 Patentblatt 2012/34**

(21) Anmeldenummer: **02706712.3**

(22) Anmeldetag: **16.01.2002**

(51) Int Cl.:
***A46B 9/02*** *(2006.01)*

(86) Internationale Anmeldenummer:
**PCT/EP2002/000371**

(87) Internationale Veröffentlichungsnummer:
**WO 2002/056726 (25.07.2002 Gazette 2002/30)**

(54) **APPLIKATOR FÜR FLÜSSIGE ODER PASTÖSE MEDIEN, INSBESONDERE DEKORATIVE KOSMETIKA WIE MASCARA**

APPLICATOR FOR LIQUID OR PASTE-LIKE MEDIA, IN PARTICULAR DECORATIVE COSMETICS SUCH AS MASCARA

APPLICATEUR POUR SUBSTANCES LIQUIDES OU PATEUSES, EN PARTICULIER POUR SUBSTANCES COSMÉTIQUES DE MAQUILLAGE TELLES QUE DU MASCARA

(84) Benannte Vertragsstaaten:
**AT BE CH CY DE DK ES FI FR GB GR IE IT LI LU MC NL PT SE TR**

(30) Priorität: **19.01.2001 DE 10102219**

(43) Veröffentlichungstag der Anmeldung:
**15.10.2003 Patentblatt 2003/42**

(73) Patentinhaber: **GEKA GmbH**
**91572 Bechhofen (DE)**

(72) Erfinder:
• **ECKERS, Lorenz**
**21255 Tostedt (DE)**
• **ZERCK, Jochen**
**22885 Barsbüttel (DE)**

(74) Vertreter: **Misselhorn, Hein-Martin et al**
**Misselhorn Wall**
**Patent- und Rechtsanwälte GbR**
**Bayerstraße 83**
**80335 München (DE)**

(56) Entgegenhaltungen:
**EP-A- 0 474 934    EP-A- 1 070 468**
**WO-A-00/54623    DE-U- 8 010 740**
**US-A- 3 892 248    US-A- 4 635 659**

**Beschreibung**

Die Erfindung betrifft einen Applikator für flüssige oder pastöse Medien, insbesondere für dekorative Kosmetika wie Mascara, mit einem stabförmigen, aussteifenden Kern aus einem ersten Kunststoff-Material, der zumindest im Bereich seines vorderen Endes von einer Trägerhülse aus einem zweiten Kunststoff-Material umgeben ist, die eine Vielzahl von radial nach außen auskragenden Fingern aufweist, die einstückig an die Trägerhülse angeformt sind und aus dem zweiten Kunststoff-Material bestehen, wobei mehrere über den Umfang der Trägerhülse verteilte Finger einen Fingerkranz bilden und wobei in Längsrichtung der Trägerhülse eine Vielzahl N von Fingerkränzen mit gleicher Fingeranzahl n hintereinander angeordnet sind.

Ein entsprechender Applikator ist in verschiedenen Anwendungsbereichen einsetzbar. Im folgenden soll beispielhaft von der Applikation von Wimperntusche, der sogenannten Mascara, ausgegangen werden, jedoch ist der erfindungsgemäße Applikator in gleichartiger Weise unter anderem auch für das Färben von Haarsträhnen oder für das Auftragen von Pharmazeutika zu verwenden.

Ein Applikator für Mascara sollte sicherstellen, daß die Mascara in einfacher Weise gleichmäßig aufzutragen ist. Zu diesem Zweck muß der Applikator die Voraussetzung erfüllen, daß die Wimpern vor dem Auftragen der Mascara zunächst gekämmt und somit in gewünschter Weise ausgerichtet werden. Darüber hinaus soll der Applikator soviel Mascara aufnehmen können, daß sämtliche Wimpern mit dem Applikator gefärbt werden können, ohne diesen mehrfach in den Mascara-Vorratsbehälter eintauchen zu müssen. Damit der Auftrag der Mascara gleichmäßig und klecksfrei erfolgt, muß sichergestellt sein, daß nicht übermäßig viel Mascara an dem Applikator anhaftet, weshalb dieser üblicherweise beim Herausziehen aus dem Mascara-Vorratsbehälter abgestreift wird. Da der Applikator als frei auskragendes Bauteil mit einem endseitigen Handgriff ausgebildet ist, muß er eine ausreichende Stabilität besitzen, um die bei Benutzung einwirkenden Kräfte sicher aufnehmen zu können, ohne daß die Gefahr eines Abbrechens besteht. Andererseits muß der Applikator jedoch so flexibel sein, daß er sich an die Krümmung der Augenlider anpassen läßt und bei fehlerhafter Anwendung ausreichend nachgiebig ist, um Verletzungen des Benutzers im Augenbereich zu vermeiden.

Bisher war es üblich (US 4,982,838), einen Mascara-Applikator aus mehreren Drähten herzustellen, zwischen denen eine Vielzahl von kurzen Borsten angeordnet werden. Nach Verdrillen der Drähte sind die Borsten fest zwischen den Drähten gehalten. Ein wesentlicher Nachteil einer derartigen gedrehten Applikatorbürste besteht darin, daß aufgrund der kompakten Anordnung der Borsten ein nicht unerheblicher Anteil der Mascara bei Benutzung in den zwischen den Borsten gebildeten Stauräumen zurückgehalten wird, in denen sich Verunreinigungen, beispielsweise Sporen oder Bakterien entwickeln können. Darüber hinaus ist mit einer derartigen Applikatorbürste aufgrund der Vielzahl von dichtgepackten Borsten ein gleichmäßiges Kämmen der Wimpern nicht zu erzielen, da die Borsten mit den Wimpern nicht in kammartigen Eingriff treten können. Eine gedrehte Applikatorbürste ist desweiteren relativ teuer in der Herstellung, da die Drähte und die Borsten einzeln erzeugt und die Borsten anschließend auf konstruktiv aufwendigen Anlagen in die Drähte eingedreht werden müssen. Dabei müssen die Borstenenden zusätzlich entgratet und geschliffen werden, um scharfkantige Enden und eine damit verbundene Verletzungsgefahr zu vermeiden. Desweiteren besteht bei gedrehten Applikatorbürsten ein zusätzlicher Nachteil darin, daß die aus den verdrillten Metalldrähten gebildete Metallseele bei Gebrauch abknicken kann, was einerseits zur Unbrauchbarkeit der Applikatorbürste führt und andererseits eine hohe Gefährdung der Augenpartie des Anwenders mit sich bringt.

Um die Nachteile von gedrehten Applikatorbürsten mit Borstenbesatz zu vermeiden, ist gemäß der WO 00/54623 ein Applikator entwickelt worden, von dem im Oberbegriff des Anspruchs 1 ausgegangen wird. Ein derartiger Applikator besitzt einen aussteifenden, stabförmigen Kern, auf den ein elastomerer Kunststoffmantel in Form einer Trägerhülse mit radial nach außen vorstehenden, einstückig angeformten Fingern aufgespritzt ist, wobei die Finger einen sich zu ihrem freien Ende hin verjüngenden Querschnitt aufweisen. Durch diese Ausgestaltung ist erreicht, daß die Finger an ihren freien Enden einen größeren gegenseitigen Abstand als in ihren unteren Fußbereichen besitzen, in denen sie mit der Trägerhülse verbunden sind. Der relativ große Abstand der freien Trägerenden bewirkt, daß im Bereich der Spitzen der Finger keine oder nur eine geringe Menge Mascara aufgenommen wird, die sich mit einem üblicherweise vorhandenen Abstreifer fast vollständig entfernen läßt. Somit ist der Spitzenbereich der Finger bei Gebrauch des Applikators im wesentlichen mascarafrei und führt eine reine Kämmwirkung aus. Dies hat zur Folge, daß die Wimpern gekämmt werden, bevor sie mit der im Fußbereich der Finger aufgenommenen Mascara in Kontakt kommen. Darüber hinaus ermöglicht es der relativ geringe Abstand zwischen benachbarten Fingern in deren Fußbereich, eine ausreichend große Menge an Mascara aufzunehmen, so daß das mehrmalige Eintauchen des Applikators in den Vorratsbehälter üblicherweise nicht notwendig ist. Es hat sich jedoch gezeigt, daß die Kämmwirkung und der Mascaraauftrag von der konstruktiven Ausgestaltung des Applikators und insbesondere der Anzahl, Ausgestaltung und Anordnung der Finger abhängig ist und daß sich nicht mit jedem Applikator der genannten Art zufriedenstellende Ergebnisse erzielen lassen.

Der Erfindung liegt die Aufgabe zugrunde, einen gattungsgemäßen Applikator derart weiterzubilden, daß sowohl eine verbesserte Kämmwirkung als auch eine gute und gleichmäßige Aufbringung des aufzutragenden Mediums gewährleistet ist.

Diese Aufgabe wird erfindungsgemäß bei einem Applikator der eingangs genannten Art durch die im kennzeichnenden Teil des Anspruchs 1 aufgeführte Parameter-Kombination gelöst.

Alle Fingerkränze sollten die gleiche Anzahl von Fingern aufweisen, die vorzugsweise über den Umfang der Trägerhülse gleichverteilt sind, d.h. einen gleichen gegenseitigen Winkelabstand besitzen. Die Anzahl n der Finger pro Fingerkranz liegt bei dem erfindungsgemäßen Applikator zwischen 8 und 16, wobei insbesondere eine gerade Anzahl n der Finger (8,10,12 oder 16 Finger) vorgesehen sein sollte.

Während die Anzahl n der Finger pro Fingerkranz die Anordnungsdichte der Finger in Umfangsrichtung bestimmt, ist die Anordnungsdichte der Finger in Längsrichtung der Trägerhülse und somit des Applikators durch die Anzahl N der in Axialrichtung hintereinanderliegenden Fingerkränze bestimmt. Der Abstand zwischen benachbarten Fingerkränzen sollte innerhalb eines vorbestimmten Bereiches liegen und darüber hinaus sollten auch nicht zu viele Fingerkränze vorgesehen sein, um die Handhabung des Applikators nicht zu erschweren und um auch bei relativ kleinen Wimpern noch einen guten Mascara-Auftrag zu erreichen. Erfindungsgemäß ist deshalb vorgesehen, daß der Applikator zwischen 14 und 30 Fingerkränze und insbesondere zwischen 20 und 27 Fingerkränze aufweist.

Die Finger aller Fingerkränze können mit gleichen Abmessungen ausgestaltet sein. Es hat sich jedoch als vorteilhaft erwiesen, sowohl am vorderen als auch am hinteren Ende des Applikators Fingerkränze mit Fingern verringerter Abmessungen auszubilden. Diese Fingerkränze kleinerer Finger werden zwar bei der Anzahl N der Fingerkränze mitgezählt, jedoch beziehen sich die folgenden Ausführungen auf die Finger eines im mittleren Bereich liegenden normalen Fingerkranzes. Dabei ist vorgesehen, daß die Länge 1 der Finger, d.h. das Maß, um das der Finger in radialer Richtung von der Trägerhülse hervorsteht, im Bereich von 1,5mm bis 3,0mm liegt.

Auch der gegenseitige Abstand $S_1$ benachbarter Fingerkränze ist ein Maß, daß die Kämmwirkung und den Mascaraauftrag wesentlich beeinflußt. Der Abstand $s_1$, der zwischen den freien Enden gleichartiger Finger benachbarter Fingerkränze gemessen wird, sollte erfindungsgemäß im Bereich von 0,6mm bis 1,5mm liegen.

Im Bereich der Füße der Finger, d.h. im Anschlußbereich der Finger an die Trägerhülse, sollten die Finger benachbarter Fingerkränze einen lichten Abstand $S_2$ in der Größenordnung von 0,2mm bis 0,5mm aufweisen.

In einem ersten Ausführungsbeispiel der Erfindung ist vorgesehen, daß der Applikator folgende Parameter-Kombination besitzt:

| | |
|---|---|
| I. n = 10 | IV. $s_1$ = 0,95mm |
| II. N = 27 | V. $s_2$ = 0,25mm. |

(fortgesetzt)

III. 1 = 2,4mm

In einer weiteren möglichen Ausgestaltung ist vorgesehen, daß die Parameter in Kombination folgende Werte annehmen:

| | |
|---|---|
| I. n = 12 | IV. $s_1$ = 1,2mm |
| II. N = 22 | V. $s_2$ = 0,42mm. |
| III. 1 = 2,4mm | |

Der Applikator weist eine im wesentlichen kreiszylinderförmige Konfiguration auf, d.h. eine Hüllfläche des Applikators besitzt einen Kreisquerschnitt, der entweder über die gesamte Länge des Fingerfeldes konstant ist oder lediglich in dessen Endbereichen in genannter Weise verringert ist. Für die praktische Handhabung des Applikators hat es sich als sinnvoll erwiesen, wenn dieser einen Außendurchmesser D im Bereich von 6,0mm bis 10,0mm und insbesondere von 8,0mm aufweist.

Der aussteifende, stabförmige Kern besitzt vorzugsweise einen Kreisquerschnitt, dessen Durchmesser im Bereich von 1,5mm bis 2,5mm liegt und insbesondere 2,0mm beträgt. Der Kern kann über seine gesamte Länge einen gleichbleibenden Querschnitt aufweisen, vorzugsweise ist jedoch vorgesehen, daß der Kern sich an seinem vorderen Ende verjüngt.

Der stabförmige Kern kann gerade ausgebildet sein, alternativ ist es jedoch auch möglich den Kern gekrümmt auszugestalten, wobei in diesem Fall eine "Bananenform", d.h. eine stetige gleichsinnige Krümmung bevorzugt ist.

Die Wandstärke a der Trägerhülse bestimmt wesentlich die elastische Lagerung der Finger und somit deren Verformbarkeit. In dem Bereich, in dem der Kern einen konstanten Querschnitt aufweist, sollte die radiale Wandstärke a der Trägerhülse im Bereich von 0,3mm bis 1,0mm liegen und insbesondere 0,6mm betragen. Wenn sich der Kern an seinem vorderen Ende verjüngt, wird die Wandstärke a der Trägerhülse in diesem Bereich entsprechend vergrößert, so daß die Außenkontur der Trägerhülse kreiszylinderförmig ist.

Der Applikator wird vorzugsweise im Zwei-Komponenten-Verfahren hergestellt. In einem ersten Schritt wird der stabförmige Kern aus dem ersten Kunststoff-Material gespritzt, woraufhin dann in einem zweiten Schritt ein elastomeres zweites Kunststoff-Material zur Bildung der Trägerhülse und der Finger auf den Kern aufgespritzt wird.

Die gesamte axiale Länge L der Trägerhülse sollte im Bereich von 20,0mm bis 35,0mm liegen und insbesondere 25,0mm betragen.

Erfindungsgemäß kann vorgesehen sein, den vorderen Bereich des Applikators mit erhöhter Flexibilität auszubilden. Dies kann dadurch erreicht werden, daß die Trägerhülse mit ihrem vorderen Endabschnitt um das Maß v über das vordere Ende des Kerns hinausragt, so daß der vordere Endabschnitt des Applikators vollständig aus dem elastomeren zweiten Kunststoff-Material gebildet ist. Das Maß v kann im Bereich von 1,0mm bis 8,0mm liegen und beträgt vorzugsweise 3,0mm.

In der einfachsten geometrischen Ausgestaltung liegen die Finger jedes Fingerkranzes mit ihren Mittelachsen in einer gemeinsamen, sich senkrecht zur Längsrichtung des Applikators erstreckenden Ebene, so daß kein Versatz einzelner Finger in Längsrichtung der Trägerhülse bzw. des Applikators vorgesehen ist. Alternativ ist es jedoch auch möglich, daß zumindest ein Finger eines Fingerkranzes gegenüber den anderen Fingern des Fingerkranzes um das Maß $V_F$ in Längsrichtung der Trägerhülse versetzt angeordnet ist. In bevorzugter Ausgestaltung der Erfindung ist dabei vorgesehen, daß jeder zweite Finger des Fingerkranzes versetzt angeordnet ist, so daß die Finger eines Fingerkranzes in zwei parallelen, in Längsrichtung der Trägerhülse beabstandeten, sich senkrecht zur Längsrichtung der Trägerhülse erstreckenden Ebenen liegen. Das Versatzmaß $V_F$ wird vorzugsweise als Vielfaches des Fußdurchmessers $d_F$ der Finger angegeben zu $V_F = f \times d_F$, wobei f ein Faktor im Bereich von 0 (kein Versatz) bis 1,5 (maximaler Versatz) ist.

Neben einem Versatz einzelner Finger innerhalb eines Fingerkranzes, können auch benachbarte Fingerkränze relativ zueinander in Umfangsrichtung um einen Winkel α versetzt angeordnet sein, wobei α zwischen 0° und 10° liegen sollte. Wenn α = 0° ist und somit kein Winkelversatz vorhanden ist, liegen die Spitzen gleichartiger Finger der Fingerkränze auf einer in Längsrichtung des Applikators verlaufenden Geraden. Wenn zwischen benachbarten Fingerkränzen ein Winkelversatz vorhanden ist, sind die Spitzen gleichartiger Finger der Fingerkränze auf einer umlaufenden Spirallinie angeordnet.

In bevorzugter Ausgestaltung der Erfindung ist vorgesehen, daß jeder Finger kegelförmig ausgebildet ist und einen Fußdurchmesser $d_F$ im Bereich von 0,4mm bis 1,0mm und insbesondere von 0,68mm besitzt. Die Finger sind an ihrem freien Ende vorzugsweise abgerundet, wobei ein Radius R der Abrundung im Bereich von 0,02mm und 0,2mm liegt und insbesondere 0,05mm beträgt.

Weitere Einzelheiten und Merkmale der Erfindung sind aus der folgenden Beschreibung von Ausführungsbeispielen unter Bezugnahme auf die Zeichnung ersichtlich. Es zeigen:

Figur 1    eine Seitenansicht eines Applikators gemäß einem grundsätzlichen Aufbau,

Figur 2    einen Längsschnitt durch den Applikator gemäß Fig. 1,

Figur 3    den Schnitt III-III in Fig. 2,

Figur 4    eine ausschnittsweise Seitenansicht des Applikators gemäß Fig. 1,

Figur 5    einen ausschnittsweisen Längsschnitt des Applikators gemäß Fig. 1,

Figur 6    einen Längsschnitt durch einen Finger in vergrößerter Darstellung,

Figur 7    eine ausschnittsweise Seitenansicht eines Applikators mit alternativer Fingeranordnung,

Figur 8    eine Seitenansicht eines ersten Ausführungsbeispiels des erfindungsgemäßen Applikators,

Figur 9    einen Längsschnitt durch den Applikator gemäß Fig. 8,

Figur 10    den Schnitt X-X in Fig. 9,

Figur 11    eine Seitenansicht eines zweiten Ausführungsbeispiels des erfindungsgemäßen Applikators,

Figur 12    einen Längsschnitt durch den Applikator gemäß Fig. 11 und

Figur 13    den Schnitt XIII-XIII in Fig. 12.

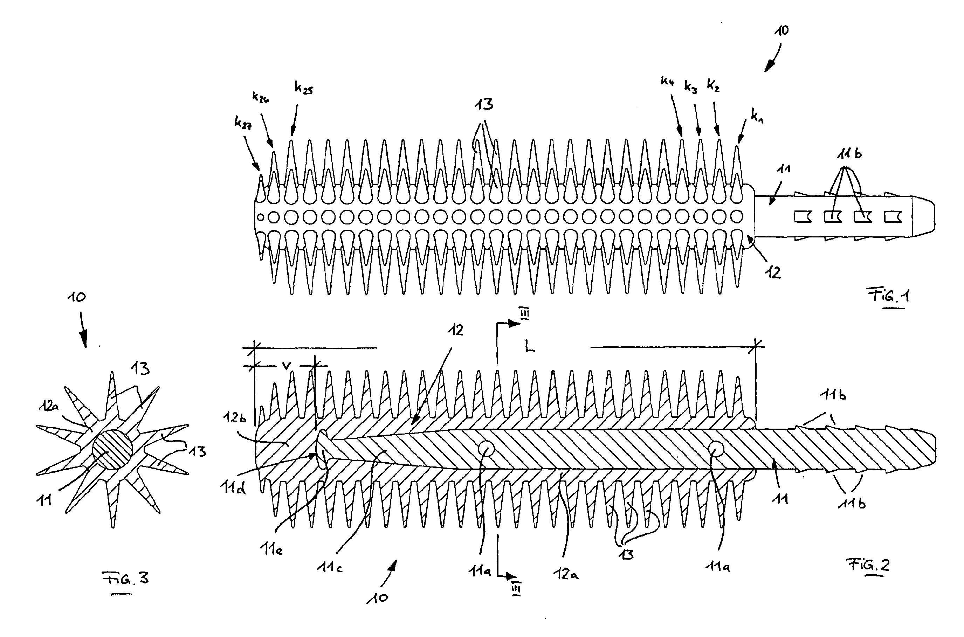

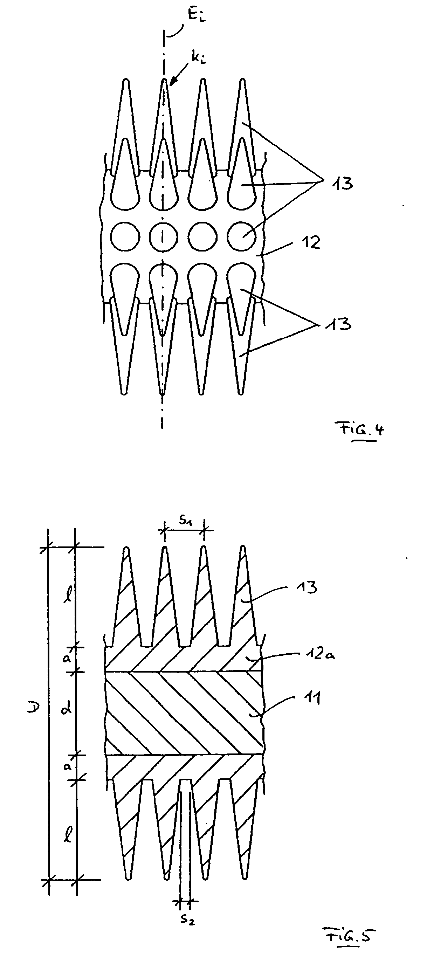

Die Fig. 1 bis 3 zeigen einen Applikator 10 grundsätzlichen Aufbaus anhand dessen in Verbindung mit den Fig. 4 bis 7 die einzelnen Parameter erläutert werden sollen.

Der Applikator 10 besitzt einen stabförmigen, aussteifenden Kern 11 mit einem Kreisquerschnitt (siehe Fig. 3), der an seinem hinteren Ende mit Verbindungselementen 11b zur Anbringung an einem nicht dargestellten Aufnahmeteil versehen ist. In seinem vorderen Endbereich 11e verjüngt sich der Kern 11 in seinem Querschnitt und trägt an seinem vorderen Ende 11d einen verbreiterten Kopf 11c, der zusammen mit im mittleren Abschnitt des Kerns 11 ausgebildeten Ausnehmungen 11a der formschlüssigen Befestigung des Kerns 11 dient. Der Kern 11 besteht aus einem ersten Kunststoff-Material und wird in der ersten Phase eines Zwei-Komponenten-Spritzgußverfahrens hergestellt.

Auf den stabförmigen Kern 11 wird in einer zweiten Phase des Zwei-Komponenten-Spritzgußverfahrens eine Trägerhülse 12 aus einem elastomeren zweiten Kunststoff-Material aufgespritzt, die aufgrund des Eingriffs mit den Ausnehmungen 11a und dem Kopf 11e des Kerns 11 mit diesem fest verbunden ist. Die Außenkontur der Trägerhülse 12 ist kreiszylindrisch, so daß sie in einem mittleren und rückseitigen Abschnitt 12a, in dem sie den einen konstanten Querschnitt aufweisenden Mittelbereich des Kerns 11 umgibt, eine konstante Wandstärke besitzt, während ihre Wandstärke in demjenigen Bereich, in dem sie den sich verjüngenden Bereich 11c des Kerns 11 umgibt, ständig zunimmt und die Querschnittsverminderung des Kerns 11 ausgleicht. Die Trägerhülse 12 ragt mit einem vorderen Endabschnitt 12b um das Maß v (siehe Fig. 2) über das vordere Ende 11d des Kerns 11 hinaus, so daß der vordere Endabschnitt 12b vollständig aus dem elastomeren zweiten Kunststoff-Material gebildet ist.

Auf der Außenseite der Trägerhülse 12 sind radial nach außen auskragende, sich zu ihrem freien Ende hin kegelförmig verjüngende Finger 13 einstückig angeformt, die ebenfalls aus dem elastomeren zweiten Kunststoff-Material bestehen. Die Finger 13 sind in Form von insgesamt N Fingerkränzen $K_1$, $K_2$, $K_3$, $K_4$, ... $K_{26}$, $K_{27}$ angeordnet, die in Längsrichtung der Trägerhülse 12 mit gleichem Abstand hintereinanderliegend angeordnet sind. Jeder Fingerkranz $K_i$ (siehe Fig. 4) umfaßt eine gewisse Anzahl n von Fingern 13, die jeweils in einer sich senkrecht zur Längsrichtung der Trägerhülse 12 erstreckenden Ebene $E_i$ liegen, von denen in Fig. 4 nur eine angedeutet ist, und unter gleichem Winkelabstand über den Umfang der Trägerhülse 12 gleich verteilt sind. Bei dem in den Fig. 1 bis 3 dargestellten Ausführungsbeispiel sind insgesamt N = 27 Fingerkränze vorgesehen, die alle n = 10 Finger 13 umfassen. Die Anordnung und Ausgestaltung der Finger 13 ist bei den meisten Fingerkränzen identisch, lediglich der am hinteren Ende ausgebildete erste Fingerkranz $K_1$ sowie die beiden letzten, am vorderen Ende der Trägerhülse 12 angeordneten Fingerkränze $K_{26}$ und $K_{27}$ weisen Finger verringerter Abmessungen auf, während die Fingerkränze $K_2$ bis $K_{25}$ eine identische Konfiguration besitzen. Angaben zu der Dimensionierung der Finger 13 beziehen sich immer auf die identisch ausgebildeten Fingerkränze.

Wie Fig. 2 zeigt, besitzt die Trägerhülse 12 eine Gesamtlänge L, wobei der Kern 11 an seinem hinteren, die Verbindungselemente 11b aufweisenden Ende aus der Trägerhülse 12 herausragt.

Wie Fig. 4 zeigt, können die Finger 13 eines beliebigen Fingerkranzes $K_i$ mit ihren Spitzen auf einer sich senkrecht zur Längsrichtung der Trägerhülse 12 erstreckenden Ebene $E_i$ liegen, wobei die Ebenen benachbarter Fingerkränze einen konstanten gegenseitigen Abstand aufweisen.

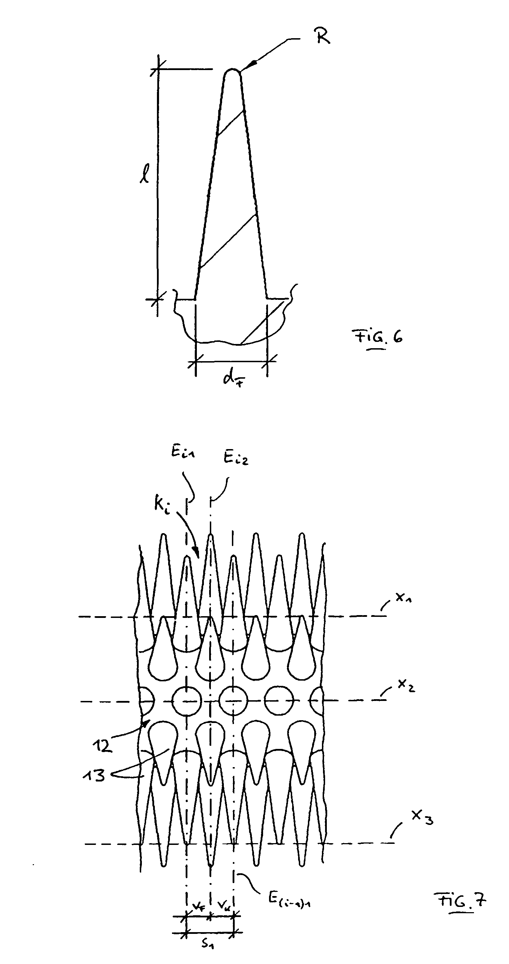

In Fig. 7 ist eine alternative Ausführung dargestellt, bei der in Umfangsrichtung gesehen jeder zweite Finger 13 des Fingerkranzes $K_i$ in Längsrichtung der Trägerhülse 12 gegenüber den anderen Fingern des Fingerkranzes versetzt angeordnet ist. Dies führt dazu, daß die Hälfte der Finger des Fingerkranzes $K_i$ mit ihren Spitzen in einer ersten, sich senkrecht zur Längsrichtung der Trägerhülse 12 erstreckenden Ebene $E_{11}$ und die andere Hälfte der Finger in einer dazu parallelen, um das Maß $v_F$ in Längsrichtung der Trägerhülse 12 versetzten Ebene $E_{i2}$ angeordnet ist. Der Abstand der Ebenen $E_{i1}$ und $E_{i2}$, d.h. das Versatzmaß $v_F$ der Finger in Längsrichtung der Trägerhülse 12 ist für alle Fingerkränze gleich. Darüber hinaus kann vorgesehen sein, daß die Ebene $E_{i2}$ einen Abstand $v_k$ zu der Ebene $E_{(i-1)1}$ des benachbarten Fingerkranzes aufweist, der gleich dem Versatzmaß $v_F$ ist.

Wie Fig. 7 zeigt, sind die einzelnen Fingerkränze in Längsrichtung der Trägerhülse 12 zueinander ausgerichtet, d.h. sie weisen in Umfangsrichtung der Trägerhülse 12 keinen Winkelversatz auf. Dies führt dazu, daß die Spitzen gleichartiger Finger der einzelnen Fingerkränze auf geraden, parallel zur Längsachse der Trägerhülse 12 verlaufenden Verbindungslinien liegen, von denen in Fig. 7 beispielhaft die drei Linien $x_1$, $x_2$ und $x_3$ dargestellt sind.

Fig. 5 zeigt die geometrischen Verhältnisse im Mittelbereich des Applikators 10. Der Kern 11 weist in seinem Abschnitt konstanten kreisförmigen Querschnitts einen Außendurchmesser d auf und ist von der Trägerhülse 12 mit einer Wanddicke a umgeben. Die Trägerhülse 12 trägt außenseitig die nach außen auskragenden, kegelförmigen, d.h. sich zum freien Ende konisch verjüngenden Finger 13, die eine radiale Länge 1 besitzen. Der Gesamtdurchmesser d einer Hüllfläche des Applikators ergibt sich somit zu:

$$D = d + 2a + 2l.$$

Die zugeordneten Finger 13 benachbarter Fingerkränze besitzen an ihren freien Enden einen gegenseitigen Abstand $s_1$, während zwischen den Fingerfüßen zugeordneter Finger benachbarter Fingerkränze ein lichter Abstand $s_2$ besteht, wie in Fig. 5 dargestellt ist. Die Finger 13 besitzen die Form eines Kreiskegels, wobei die Grund- oder Anschlußfläche des Fingers einen Durchmesser $d_F$ (siehe Fig. 6) aufweist. Die Finger sind an ihrem äußeren freien Ende mit einem Radius R abgerundet.

Für die einzelnen Parameter haben sich folgende Bereiche als sinnvoll erwiesen:

1. Gesamtdurchmesser D des Applikators: 6,0mm bis 10,0mm.

2. Kerndurchmesser d: 1,5mm bis 2,5mm.

3. Wandstärke a Trägerhülse: 0,3mm bis 1,0mm.

4. Fingerlänge 1: 1, 5mm bis 3,0mm.

5. Abstand $s_1$ der Fingerspitzen benachbarter Fingerkränze: 0,6mm bis 1,5mm.

6. Abstand $s_2$ der Fingerfüße benachbarter Fingerkränze: 0,2mm bis 0,5mm.

7. Gesamtlänge L der Trägerhülse: 20,0mm bis 35,0mm.

8. Länge v des vorderen, nicht ausgesteiften Bereichs: 1,0mm bis 8,0mm.

9. Anzahl n der Finger pro Fingerkranz: 8 bis 16, insbesondere 8, 10, 12 oder 16.

10. Anzahl N der Fingerkränze: 14 bis 30.

11. Durchmesser $d_F$ des Fingerfußes: 0,4mm bis 1,0mm.

12. Rundungsradius R der Fingerspitze: 0,02mm bis 0,2mm.

13. Axialer Versatz $v_F$ der Finger eines Fingerkranzes: $v_F = f \times d_F$, wobei $0 \leq f \leq 1,5$.

14. Versatzwinkel $\alpha$ benachbarter Fingerkränze in Umfangsrichtung: $0° \leq \alpha \leq 10°$.

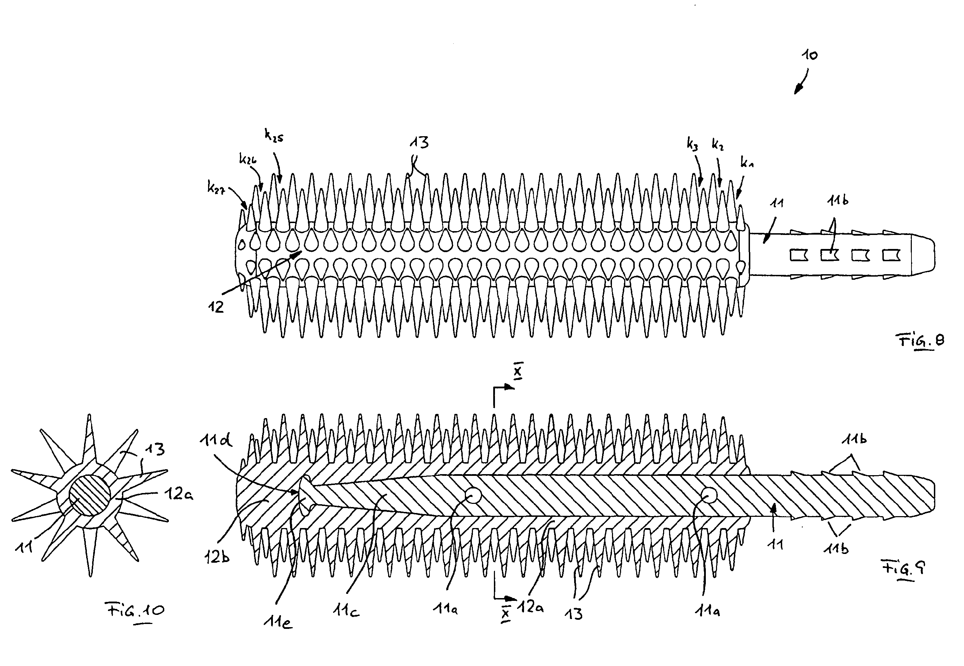

Die Fig. 8 bis 10 zeigen ein erstes konkretes Ausführungsbeispiel eines Applikators 10. Dieser unterscheidet sich von dem in den Fig. 1 bis 3 dargestellten grundsätzlichen Aufbau einerseits durch eine spezielle Parameter-Kombination, wobei insgesamt N = 27 Fingerkränze vorgesehen sind, von denen der hintere erste Fingerkranz $K_1$ und die beiden vorderen Kränze $K_{26}$ und $K_{27}$ Finger 13 verringerter Abmessungen aufweisen. Alle anderen Fingerkränze $K_2$ bis $K_{25}$ besitzen die gleiche Konfiguration mit über den Umfang der Trägerhülse 12 gleichverteilten n = 10 Fingern, wobei jeder zweite Finger jedes Fingerkranzes gegenüber den anderen Fingern um das Maß $v_F = s_1/2 = f \times d_F = 0,48$mm versetzt ist, wobei f = 0,7. Die genauen Parameterwerte sind der folgende Aufstellung zu entnehmen:

| | | |
|---|---|---|
| D = 8,0mm | $s_2$ = 0,25mm | $d_F$ = 0,68mm |
| d = 2,0mm | L = 25,0mm | VF = 0,48mm |
| a = 0,6mm | v = 3,0mm | R = 0,05mm |
| 1 = 2,4mm | n = 10 | $\alpha$ = 0°. |
| $s_1$ = 0,95mm | N = 27 | |

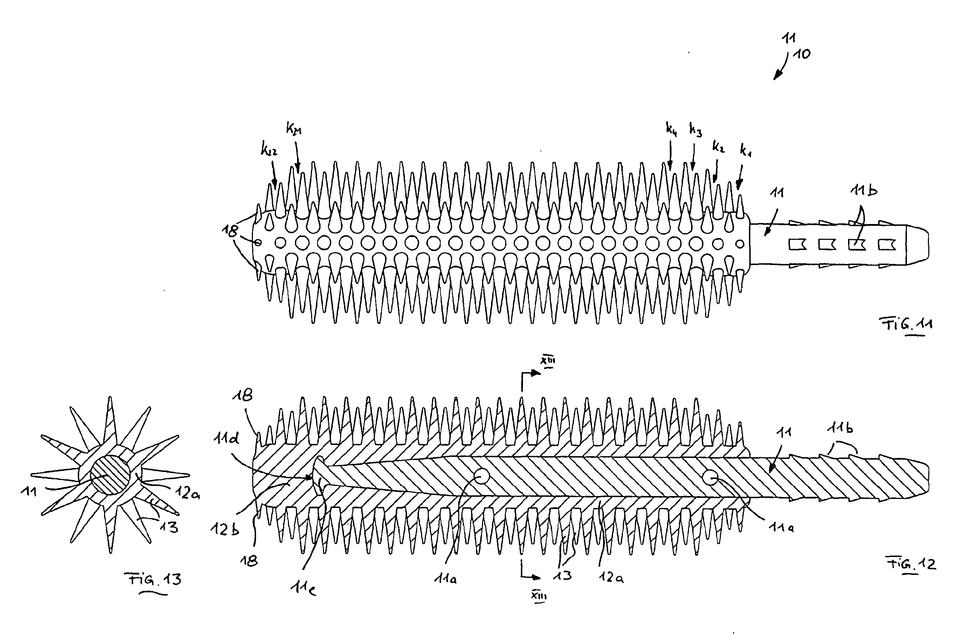

Die Fig. 11 bis 13 zeigen ein weiteres Ausführungsbeispiel mit einer vorteilhaften Parameter-Kombination, wobei hier die hinteren ersten beiden Fingerkränze $K_1$ und $K_2$ sowie der vordere letzte Fingerkranz $K_{22}$ Finger verringerter Abmessungen aufweisen, wobei am vorderen Ende der Trägerhülse 13 zusätzlich fünf kleine, über den Umfang der Trägerhülse 12 verteilte Finger 18 angeformt sind, die jedoch nicht Bestandteil eines Fingerkranzes sind. Auch hierbei ist wieder vorgesehen, jeden zweiten Finger des Fingerkranzes um das Maß $v_F = s_1/2 = f \times d_F = 0,48$mm in Längsrichtung der Trägerhülse 12 gegenüber den anderen Fingern zu versetzen.

Die genauen Parameter-Werte sind der folgenden Aufstellung zu entnehmen:

| | | |
|---|---|---|
| D = 8,0mm | $s_2$ = 0,42mm | $d_F$ = 0,68mm |
| d = 2,0mm | L = 25,0mm | VF = 0,48mm |
| a = 0,6mm | v = 3,0mm | R = 0,05mm |
| 1 = 2,4mm | n = 12 | $\alpha$ = 0°. |
| $s_1$ = 1,2mm | N = 22 | |

**Patentansprüche**

1. Applikator für flüssige oder pastöse Medien, insbesondere für dekorative Kosmetika wie Mascara, mit einem stabförmigen, aussteifenden Kern (11) aus einem ersten Kunststoff-Material, der zumindest im Bereich seines vorderen Endes von einer Trägerhülse (12) aus seinem zweiten Kunststoff-Material umgeben ist, die eine Vielzahl von radial nach außen auskragenden Fingern (13) aufweist, die einstückig an die Trägerhülse (12) angeformt sind und aus dem zweiten Kunststoff-Material bestehen, wobei mehrere über den Umfang der Trägerhülse (12) verteilte Finger (13) einen Fingerkranz ($K_1$, $K_2$, $K_3$...) bilden und wobei in Längsrichtung der Trägerhülse (12) eine Vielzahl N von Fingerkränzen ($K_1$, $K_2$, $K_3$...) mit gleicher Fingeranzahl n hintereinander angeordnet sind, **gekennzeichnet durch** folgende Parameter-Kombination:

I. Anzahl n der Finger (13) pro Fingerkranz ($K_1$, $K_2$, $K_3$...) : 8 bis 16,
II. Anzahl N der in Axialrichtung der Trägerhülse hintereinander liegenden Fingerkränze ($K_1$, $K_2$, $K_3$...): $14 \leq N \leq 30$, insbesondere $20 \leq N \leq 27$
III. Länge 1 der Finger (13): $1,5mm \leq 1 \leq 3,0$ mm,
IV. Abstand $s_1$ der freien Enden gleichartiger Finger (13) benachbarter Fingerkränze ($K_1$, $K_2$, $K_3$...): $0,6mm \leq s_1 \leq 1,5mm$ und
V. Abstand $s_2$ der Füße gleichartiger Finger (13) benachbarter Fingerkränze ($K_1$, $K_2$, $K_3$...) : $0,2mm \leq s_2 \leq 0,5mm$.
VI. Außendurchmesser D des Applikators: von 6,0mm bis 10,0mm.

2. Applikator nach Anspruch 1, **gekennzeichnet durch** folgende Parameter-Kombination:

| | |
|---|---|
| I. n = 10 | IV. $s_1$ = 0,95mm |
| II. N = 27 | V. $s_2$ = 0,25mm. |
| III. l = 2,4mm | |

3. Applikator nach Anspruch 1, **gekennzeichnet durch** folgende Parameter-Kombination:

| | |
|---|---|
| I. n = 12 | IV. $s_1$ = 1,2mm |

(fortgesetzt)

II. N = 22     V. $s_2$ = 0,42mm.
III. l = 2,4mm

4. Applikator nach einem der Ansprüche 1 bis 3, **dadurch gekennzeichnet, daß** die Finger (13) des Fingerkranzes ($K_1$, $K_2$, $K_3$...) über den Umfang der Trägerhülse (12) gleich verteilt sind.

5. Applikator nach einem der Ansprüche 1 bis 4, **dadurch gekennzeichnet, daß** der Außendurchmesser D des Applikators 8,0mm beträgt.

6. Applikator nach einem der Ansprüche 1 bis 5, **dadurch gekennzeichnet, daß** der Außendurchmesser d des Kerns (11) im Bereich von 1,5mm bis 2,5mm liegt.

7. Applikator nach Anspruch 6, **dadurch gekennzeichnet, daß** der Außendurchmesser d des Kerns (11) 2,0mm beträgt.

8. Applikator nach einem der Ansprüche 1 bis 7, **dadurch gekennzeichnet, daß** der Kern (11) sich an seinem vorderen Ende verjüngt.

9. Applikator nach einem der Ansprüche 1 bis 8, **dadurch gekennzeichnet, daß** die Trägerhülse (12) eine radiale Wandstärke a im Bereich von 0,3mm bis 1,0mm aufweist.

10. Applikator nach Anspruch 9, **dadurch gekennzeichnet, daß** die radiale Wandstärke a der Trägerhülse (12). 0,6mm beträgt.

11. Applikator nach einem der Ansprüche 1 bis 10, **dadurch gekennzeichnet, daß** die Trägerhülse (12) zusammen mit den Fingern (13) aus einem elastomeren Kunststoff besteht.

12. Applikator nach einem der Ansprüche 1 bis 11, **dadurch gekennzeichnet, daß** die Trägerhülse (12) eine axiale Länge L im Bereich von 20,0mm bis 35,0mm besitzt.

13. Applikator nach Anspruch 12, **dadurch gekennzeichnet, daß** die axiale Länge L der Trägerhülse (12) 25,0mm beträgt.

14. Applikator nach einem der Ansprüche 1 bis 13, **dadurch gekennzeichnet, daß** die Trägerhülse (13) in ihrem vorderen Endabschnitt (12b) um das Maß v über das vordere Ende (11d) des Kerns (11) hinausragt, wobei v im Bereich von 1,0mm bis 8,0mm liegt.

15. Applikator nach Anspruch 14, **dadurch gekenn-**

**zeichnet, daß** das Maß v 3,0mm beträgt.

16. Applikator nach einem der Ansprüche 1 bis 15, **dadurch gekennzeichnet, daß** zumindest ein Finger eines Fingerkranzes gegenüber den anderen Fingern des Fingerkranzes um das Maß $v_F$ in Längsrichtung der Trägerhülse (12) versetzt angeordnet ist.

17. Applikator nach Anspruch 16, **dadurch gekennzeichnet, daß** jeder zweite Finger des Fingerkranzes versetzt angeordnet ist.

18. Applikator nach Anspruch 16 oder 17, **dadurch gekennzeichnet**, **dadurch gekennzeichnet, daß** für das Maß $v_F$ gilt:

$$v_F = f \times d_F,$$

wobei $d_F$ der Fußdurchmesser des Fingers (13) ist und f ein Faktor im Bereich von 0 bis 1,5 ist.

19. Applikator nach einem der Ansprüche 1 bis 18, **dadurch gekennzeichnet, daß** benachbarte Fingerkränze ($K_1$, $K_2$, $K_3$...) in Umfangsrichtung um einen Winkel $\alpha$ versetzt zueinander angeordnet sind, wobei gilt: $0° \leq \alpha \leq 10°$.

20. Applikator nach einem der Ansprüche 1 bis 19, **dadurch gekennzeichnet, daß** der Fußdurchmesser $d_F$ des Fingers (13) im Bereich von 0,4mm bis 1,0mm liegt.

21. Applikator nach Anspruch 20, **dadurch gekennzeichnet, daß** der Fußdurchmesser $d_F$ des Fingers (13) 0,68mm beträgt.

22. Applikator nach einem der Ansprüche 1 bis 21, **dadurch gekennzeichnet, daß** die Finger (13) kegel- oder pyramidenförmig ausgebildet und an ihrem freien Ende abgerundet sind.

23. Applikator nach Anspruch 22, **dadurch gekennzeichnet, daß** ein Radius R der Abrundung im Bereich von 0,02mm und 0,2mm liegt.

24. Applikator nach Anspruch 23, **dadurch gekennzeichnet, daß** der Radius R der Abrundung 0,05mm beträgt.

## Claims

1. Applicator for liquid or pasty media, in particular for decorative cosmetics such as mascara, having a stiffening rod-shaped core (11) which is made of a first plastic material and, at least in the region of its front end, is enclosed by a carrier sleeve (12) which is made of a second plastic material and has a plurality of radially outwardly projecting fingers (13), which are integrally moulded on the carrier sleeve (12) and consist of the second plastic material, several fingers (13) that are distributed over the circumference of the carrier sleeve (12) forming a finger ring ($K_1$, $K_2$, $K_3$,...), and a plurality N of finger rings ($K_1$, $K_2$, $K_3$,...) with the same number n of fingers being arranged one behind the other in the longitudinal direction of the carrier sleeve (12), **characterised by** the following combination of parameters:

   I. number n of fingers (13) per finger ring ($K_1$, $K_7$, $K_3$,...): 8 to 16,
   II. number N of finger rings ($K_1$, $K_2$, $K_3$,...) located one behind the other in the axial direction of the carrier sleeve: $14 \leq N \leq 30$, in particular $20 \leq N \leq 27$,
   III. length 1 of the fingers (13): $1.5\,mm \leq 3.0\,mm$,
   IV. spacing $s_1$ between the free ends of identical fingers (13) of adjacent finger rings ($K_1$, $K_2$, $K_3$,...): $0.6\,mm \leq s_1 \leq 1.5\,mm$ and
   V. spacing $s_2$ between the feet of identical fingers (13) of adjacent finger rings ($K_1$, $K_2$, $K_3$,...): $0.2\,mm \leq s_2 \leq 0.5\,mm$.
   VI. external diameter D of the applicator: from 6.0 mm to 10.0 mm.

2. Applicator according to claim 1, **characterised by** the following combination of parameters:

   I. n = 10        IV. $s_1$ = 0,95mm
   II. N = 27       V. $s_2$ = 0,25mm.
   III. l = 2,4mm

3. Applicator according to claim 1, **characterised by** the following combination of parameters:

   I. n = 12        IV. $s_1$ = 1,2mm
   II. N = 22       V. $s_2$ = 0,42mm.
   III. l = 2,4mm

4. Applicator according to any one of the claims 1 to 3, **characterised in that** the fingers (13) of the finger ring ($K_1$, $K_2$, $K_3$,...) are distributed equally over the circumference of the carrier sleeve (12).

5. Applicator according to any one of the claims 1 to 4, **characterised in that** the external diameter D of the applicator is 8.0 mm.

6. Applicator according to any one of the claims 1 to 5, **characterised in that** the external diameter d of the core (11) is in the range from 1.5 mm to 2.5 mm.

7. Applicator according to claim 6, **characterised in that** the external diameter d of the core (11) is 2.0 mm.

8. Applicator according to any one of the claims 1 to 7, **characterised in that** the core (11) tapers at its front end.

9. Applicator according to any one of claims 1 to 8, **characterised in that** the carrier sleeve (12) has a radial wall thickness a in the range from 0.3 mm to 1.0 mm.

10. Applicator according to claim 9, **characterised in that** the radial wall thickness a of the carrier sleeve (12) is 0.6 mm.

11. Applicator according to any one of claims 1 to 10, **characterised in that** the carrier sleeve (12), together with the fingers (13), consists of an elastomeric plastic material.

12. Applicator according to any one of the claims 1 to 11, **characterised in that** the carrier sleeve (12) has an axial length L in the range from 20.0 mm to 35.0 mm.

13. Applicator according to claim 12, **characterised in that** the axial length L of the carrier sleeve (12) is 25.0 mm.

14. Applicator according to any one of claims 1 to 13, **characterised in that** the carrier sleeve (13), in its front end section (12b), projects beyond the front end (11d) of the core (11) by the extent v, where v is in the range from 1.0 mm to 8.0 mm.

15. Applicator according to claim 14, **characterised in that** the extent v is 3.0 mm.

16. Applicator according to any one of the claims 1 to 15, **characterised in that** at least one finger of a finger ring is offset by the extent $v_F$ in the longitudinal direction of the carrier sleeve (12) in relation to the other fingers of the finger ring.

17. Applicator according to claim 16, **characterised in that** every second finger of the finger ring is disposed offset.

18. Applicator according to claim 16 or 17, **characterised in that** for the extent $V_F$:

$$v_F = f \times d_F,$$

where $d_F$ is the foot diameter of the finger (13) and f is a factor in the range from 0 to 1.5.

**19.** Applicator according to one of claims 1 to 18, **characterised in that** adjacent finger rings $(K_1, K_2, K_3,...)$ are offset in relation to one another by an angle $\alpha$ in the circumferential direction, where : $0° \leq \alpha \leq 10°$.

**20.** Applicator according to any one of the claims 1 to 19, **characterised in that** the foot diameter $d_F$ of the finger (13) is in the range from 0.4 mm to 1.0 mm.

**21.** Applicator according to claim 20, **characterised in that** the foot diameter $d_F$ of the finger (13) is 0.68 mm.

**22.** Applicator according to any one of the claims 1 to 21, **characterised in that** the fingers (13) are designed in the form of cones or pyramids and are rounded at their free end.

**23.** Applicator according to claim 22, **characterised in that** a radius R of the rounded portion is in the range from 0.02 mm to 0.2 mm.

**24.** Applicator according to claim 23, **characterised in that** the radius R of the rounded portion is 0.05 mm.

**Revendications**

**1.** Applicateur pour substances liquides ou pâteuses, en particulier pour des cosmétiques de maquillage tels que du mascara, comprenant un noyau de rigidification (11) en forme de tige en une première matière plastique qui est entourée, au moins dans la région de son extrémité antérieure, par une douille porteuse (12) en une seconde matière plastique qui présente une pluralité de doigts (13) en porte-à-faux vers l'extérieur, lesquels sont conformés d'un seul tenant sur la douille porteuse (12) et sont constitués de la seconde matière plastique, dans lequel plusieurs doigts (13) distribués sur la périphérie de la douille porteuse (12) forment une couronne de doigts (K1, K2, K3, ...) et dans lequel une pluralité de N couronnes de doigts (K1, K2, K3, ...) avec le même nombre de doigts n sont agencées les unes derrière les autres en direction longitudinale de la douille porteuse (12), **caractérisé par** la combinaison de paramètres suivante :

I) le nombre n de doigts (13) par couronne de doigts (K1, K2, K3, ...) est de 8 à 16,
II) le nombre N des couronnes de doigts (K1, K2, K3, ...) disposées les unes derrière les autres en direction axiale de la douille porteuse est tel que $14 \leq N \leq 30$, en particulier $20 \leq N \leq 27$,
III) la longueur 1 des doigts (13) est telle que 1,5 mm $\leq 1 \leq 3,0$ mm,

IV) la distance $s_1$ des extrémités libres de doigts de même type (13) dans des couronnes de doigts voisines (K1, K2, K3, ...) est telle que 0,6 mm $\leq s_1 \leq 1,5$ mm,
V) la distance $s_2$ des pieds de doigts de même type (13) dans des couronnes de doigts voisines (K1, K2, K3, ...) est telle que 0,2 mm $\leq s_2 \leq 0,5$ mm,
VI) le diamètre extérieur D de l'applicateur est de 6,0 mm à 10,0 mm.

**2.** Applicateur selon la revendication 1, **caractérisé par** la combinaison de paramètres suivante :

I) n = 10
II) N = 27
III) 1 = 2,4 mm
IV) $s_1$ = 0,95 mm
V) $s_2$ = 0,25 mm.

**3.** Applicateur selon la revendication 1, **caractérisé par** la combinaison de paramètres suivante :

I) n = 12
II) N = 22
III) 1 = 2,4 mm
IV) $s_1$ = 1,2 mm
V) $s_2$ = 0,42 mm.

**4.** Applicateur selon l'une des revendications 1 à 3, **caractérisé en ce que** les doigts (13) de la couronne de doigts (K1, K2, K3, ...) sont distribués de manière égale sur la périphérie de la douille porteuse (12).

**5.** Applicateur selon l'une des revendications 1 à 4, **caractérisé en ce que** le diamètre extérieur D de l'applicateur est 8,0 mm.

**6.** Applicateur selon l'une des revendications 1 à 5, **caractérisé en ce que** le diamètre extérieur d du noyau (11) est situé dans la plage de 1,5 mm à 2,5 mm.

**7.** Applicateur selon la revendication 6, **caractérisé en ce que** le diamètre extérieur d du noyau (11) est 2,0 mm.

**8.** Applicateur selon l'une des revendications 1 à 7, **caractérisé en ce que** le noyau (11) va en se rétrécissant à son extrémité antérieure.

**9.** Applicateur selon l'une des revendications 1 à 8, **caractérisé en ce que** la douille porteuse (12) présente une épaisseur de paroi radiale a dans la plage de 0,3 mm à 1,0 mm.

**10.** Applicateur selon la revendication 9, **caractérisé en ce que** l'épaisseur de paroi radiale a de la douille porteuse (12) est 0,6 mm.

**11.** Applicateur selon l'une des revendications 1 à 10, **caractérisé en ce que** la douille porteuse (12) est constituée, conjointement avec les doigts (13), en une matière plastique élastomère.

**12.** Applicateur selon l'une des revendications 1 à 11, **caractérisé en ce que** la douille porteuse (12) possède une longueur axiale L dans la plage de 20,0 mm à 35,0 mm.

**13.** Applicateur selon la revendication 12, **caractérisé en ce que** la longueur axiale L de la douille porteuse (12) est 25,0 mm.

**14.** Applicateur selon l'une des revendications 1 à 13, **caractérisé en ce que** la douille porteuse (13) dépasse, dans sa portion terminale antérieure (12b), d'une distance v au-delà de l'extrémité antérieure (11d) du noyau (11), dans lequel v est dans la plage de 1,0 mm à 8,0 mm.

**15.** Applicateur selon la revendication 14, **caractérisé en ce que** la distance v est 3,0 mm.

**16.** Applicateur selon l'une des revendications 1 à 15, **caractérisé en ce qu'**au moins un doigt d'une couronne de doigts est agencé en décalage par rapport aux autres doigts de la couronne de doigts d'une distance $v_F$ en direction longitudinale de la douille porteuse (12).

**17.** Applicateur selon la revendication 16, **caractérisé en ce qu'**un doigt sur deux de la couronne de doigts est agencé en décalage.

**18.** Applicateur selon la revendication 17 ou 18, **caractérisé en ce que** la distance $v_F$ est telle que :

$$v_F = f \times d_F$$

dans laquelle $d_F$ est le diamètre au pied des doigts (13), et f est un facteur dans la plage de 0 à 1,5.

**19.** Applicateur selon l'une des revendications 1 à 18, **caractérisé en ce que** des couronnes de doigts voisines (K1, K2, K3, ...) sont agencées en décalage les unes par rapport aux autres en direction périphérique d'un angle $\alpha$ tel que $0° \leq \alpha \leq 10°$.

**20.** Applicateur selon l'une des revendications 1 à 19, **caractérisé en ce que** le diamètre au pied $d_F$ du doigt (13) est dans la plage de 0,4 mm à 1,0 mm.

**21.** Applicateur selon la revendication 20, **caractérisé en ce que** le diamètre au pied $d_F$ du doigt (13) est 0,68 mm.

**22.** Applicateur selon l'une des revendications 1 à 21, **caractérisé en ce que** les doigts (13) sont réalisés en forme de cône ou de pyramide et sont arrondis à leur extrémité libre.

**23.** Applicateur selon la revendication 22, **caractérisé en ce que** le rayon R de l'arrondi est dans la plage de 0,02 mm à 0,2 mm.

**24.** Applicateur selon la revendication 23, **caractérisé en ce que** le rayon R de l'arrondi est égal à 0,05 mm.

FIG. 1

FIG. 2

FIG. 3

FIG. 4

FIG. 5

12

FIG. 6

FIG. 7

Fig. 8

Fig. 9

Fig. 10

EP 1 351 592 B1

$k_{12}$ $k_{11}$ $k_4$ $k_3$ $k_2$ $k_1$

18 11 11b

Fig. 11

1B

$x_{III}$

11d

11e

12b

18

11c 11a $x_{III}$ 13 12a

11 11b

11a

Fig. 12

11 12a

13

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4982838 A
- WO 0054623 A